**Europäisches Patentamt**

**European Patent Office**

**Office européen des brevets**

(19)

(11) Veröffentlichungsnummer : **0 305 769 B1**

(12)

# EUROPÄISCHE PATENTSCHRIFT

(45) Veröffentlichungstag der Patentschrift :
**11.09.91 Patentblatt 91/37**

(51) Int. Cl.$^5$ : **G01N 27/30**

(21) Anmeldenummer : **88112830.0**

(22) Anmeldetag : **06.08.88**

(54) Redoxelektrode zur Bestimmung von salpetriger Säure und Nitrosylverbindungen.

(30) Priorität : **17.08.87 DE 3727384**

(43) Veröffentlichungstag der Anmeldung :
**08.03.89 Patentblatt 89/10**

(45) Bekanntmachung des Hinweises auf die
Patenterteilung :
**11.09.91 Patentblatt 91/37**

(84) Benannte Vertragsstaaten :
**AT BE CH DE FR IT LI**

(56) Entgegenhaltungen :
**DE-A- 2 924 694**
**US-A- 3 923 627**
**PATENT ABSTRACTS OF JAPAN, unexamined**
**applications, Sektion P, Band 5, Nr. 118, 30.**
**Juli 1981 THE PATENT OFFICE JAPANESE**
**GOVERNMENT Seite 121 P 73**

(73) Patentinhaber : **BASF Aktiengesellschaft**
**Carl-Bosch-Strasse 38**
**W-6700 Ludwigshafen (DE)**

(72) Erfinder : **Habermann, Wolfgang**
**Gonsenheimer Spiess 8**
**W-6500 Mainz 1 (DE)**
Erfinder : **Hammes, Peter, Dr.**
**Haagweg 14**
**W-6701 Ruppertsberg (DE)**
Erfinder : **Messlinger, Reinhard, Dr.**
**Russiconstrasse 29**
**W-6700 Ludwigshafen-Ruchheim (DE)**
Erfinder : **Munzinger, Manfred**
**Am Herrgottsacker 5**
**W-6716 Dirmstein (DE)**
Erfinder : **Froehlich, Helmut, Dr.**
**Dirmsteiner Weg 35**
**W-6700 Ludwigshafen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine Redoxelektrode zur Bestimmung von salpetriger Säure und Nitrosylverbindungen in wäßriger saurer Lösung.

Zur Messung der salpetrigen Säure bzw. der Nitrosylverbindungen wurden bisher die Standard-Platinredoxelektrode, Redoxelektroden aus anderen Platinmetallen oder Gold geprüft. Es zeigte sich, daß Elektroden aus diesen Materialien nicht selektiv sind, da neben der salpetrigen Säure, Sauerstoff, Salpetersäure sowie die bei der Diazotierung gebildeten Diazoverbindungen das Potential bestimmen. Außerdem weisen die beschriebenen Materialien in Elektrolyten mit Nitrosylverbindungen keine ausreichende chemische Beständigkeit auf und werden durch höher konzentriertere, salpetrige Säurelösungen vergiftet. Beschichtungen der aufgeführten Elektrodenmaterialien mit Siliconfilmen verzögerten die Potentialeinstellung und führten schließlich zur Kieselsäurebildung und damit zur Inaktivierung der Redoxelektroden. Dotierte Siliziumcarbidelektroden wurden durch Verkieselung träge und inaktiv, während Elektroden mit löslichen Oxidationsprodukten nicht selektiv waren und keine Langzeitstabilität aufwiesen.

Bei der Diazotierung von primären, aromatischen Aminen oder bei der Umsetzung von aliphatischen Aminen mit salpetriger Säure muß die Konzentration der salpetrigen Säure, die in Nebenreaktionen auch als Oxidationsmittel fungiert, kontrolliert werden, um die Bildung unerwünschter Produkte zu vermeiden. Die salpetrige Säure liegt je nach eingesetzter Mineralsäure als Nitrosylhalogenid, Nitrosylsulfat oder als Nitrosoniumion vor. Ein Teil der salpetrigen Säure kann auch durch Disproportionierung zu Stickstoffmonoxid und Salpetersäure für die gewünschte Reaktion verloren gehen.

Bei der Reindarstellung von Salpetersäure werden die salpetrige Säure bzw. Nitrosylionen durch Entgasung auf Konzentrationen < 10 ppm abgesenkt, was eine genaue Endpunkterfassung erforderlich macht. In der Abwassertechnik, Landwirtschaft und Lebensmittelchemie muß Nitrit neben anderen Oxidantien quantitativ erfaßt werden. Diese Messungen sind bisher aufwendig und kostenintensiv.

Aufgabe der vorliegenden Erfindung ist es, die salpetrige Säure und die Nitrosylverbindungen neben anderen Oxidationsmitteln wie z.B. Sauerstoff oder Saltpetersäure selektiv zu messen, ohne daß es zu einer Inaktivierung der Redoxelektrode kommt.

Die Aufgabe wurde erfindungsgemäß dadurch gelöst, daß man eine Redoxelektrode verwendet., bei der der Elektrodenkern aus einem metallischen Leiter besteht, auf dem sich eine n-leitende Metalloxidoberfläche mit einem Leitwert $\chi$ von $10^{-7}\ \Omega^{-1}\ cm^{-1}$ bis $1 \cdot 10^2\ \Omega^{-1}\ cm^{-1}$ befindet.

Weitere Ausgestaltungen der Erfindung sind Gegenstand der Unteransprüche 2 bis 6.

Als Material für die Elektrodenkerne verwendet man einen metallischen Leiter wie z.B. Platin, Palladium, Rhodium, Ruthenium, Iridium, Osmium, Kupfer, Silber, Gold, Titan, Zirkonium, Hafnium, Vanadium, Niob, Tantal, Molybdän, Wolfram oder Legierungen dieser Metalle.

Vorzugsweise kommt Wolfram, Molybdän, Tantal, Niob oder Titan in Betracht.

Als n-leitende Oxide werden Metalloxide der Metalle der IV. bis VI. Nebengruppe des periodischen Systems der Elemente auf die Elektrodenkerne aufgetragen. Vorzugsweise verwendet man Oxide oder Mischoxide aus 4- bis 6-wertigem Wolfram und/oder Molybdän, 3- bis 4-wertigem Titan sowie 3- bis 5-wertigem Vanadium und/oder Tantal.

Die Aufbringung der n-leitenden Metalloxidschichten auf die Elektrodenkerne kann z.B. durch Aufdampfverfahren im Hochvakuum, chemische Gasphasenbeschichtung oder eine anodische Oxidation erfolgen.

Zur Fertigung der Redoxelektroden verwendet man Elektrodenkerne in Form von Blechen oder Stäben mit glatter und porendichter Oberfläche. Die Reinheit der Metalle ist wesentlich, so daß nur Metalle mit einem Gehalt von > 99,9 Gew.% verwendet werden können.

Vor der Erzeugung der beanspruchten Oxidoberfläche auf den Elektrodenkernen wird die Metalloberfläche durch eine Ionenätzung mit Edelgasen oder mechanisch und chemisch von Oxiden und Verunreinigungen befreit. Zur chemischen Beizung eignet sich ein Gemisch aus Flußsäure, Salpetersäure und Phosphorsäure bei Temperaturen ~ +80°C.

Die n-leitende Metalloxidoberfläche auf den Elektrodenkernen wird vorzugsweise durch anodische Oxidation in wäßrigen Mineralsäuren hergestellt. Besonders geeignet als wäßrige Mineralsäure ist 50 gew.%ige, wäßrige Schwefelsäure.

Das Potential der Redoxelektrode bei der Oxidfilmbildung durch anodische Oxidation sollte etwa 5 bis 10 V betragen. Zum Aufbau einer selektiv arbeitenden Oxidschicht von > 100 Å ist eine Oxidationszeit von 5-30 Minuten erforderlich.

Oxidschichten von < 80 Å Dicke gewährleisten keine ausreichende Selektivität.

Der elektrische Leitwert $\kappa$ der Metalloxide oder Mischoxide sollte $10^{-7}\ \Omega^{-1} \cdot cm^{-1}$ bis $1 \cdot 10^2\ \Omega^{-1} \cdot cm^{-1}$, vorzugsweise $10^{-6}\ \Omega^{-1} \cdot cm^{-1}$ bis $1 \cdot 10^1\ \Omega^{-1} \cdot cm^{-1}$ betragen.

Die Redoxelektrode ist zur amperometrischen oder potentiometrischen Bestimmung der Konzentration an salpetriger Säure und Nitrosylverbindungen in wäßrigen, sauren Elektrolyten geeignet, vorzugsweise wird eine potentiometrische Messung, die Polarovoltrie eingesetzt. Bei diesem Meßverfahren wird die Redoxelektrode gegen eine Hilfselektrode aus Platin oder Platinmetallen mit einer Stromdichte von 0,1 bis 5 µA/cm² Oberfläche kathodisch polarisiert. Die Messung von Nitrit erfolgt durch Ansäuern mit nicht oxidierenden Mineralsäuren über die freigesetzte salpetrige Säure.

Das Ruhepotential der Redoxelektrode sollte bei kathodischer Polarisation und Abwesenheit von salpetriger Säure bzw. Nitrosylverbindungen etwa + 20 mV gegenüber dem pH-Wert abhängigen Wasserstoffabscheidepotential im Meßelektrolyten betragen.

Als Referenzelektroden zur Bestimmung des Potentials, das als Meßgröße für die salpetrige Säure und die Nitrosylverbindungen dient, werden Kalomel-, Thalamid- oder Silber-Silberchlorideelektroden verwendet.

Bei Verunreinigungen der Redoxelektrode mit Belägen, z.B. mit teerigen Substanzen, die als Nebenprodukte bei Diazotierungen zuftreten können, ist die Reinigung durch eine kurzzeitige kathodische oder anodische Polarisation über 1 bis 3 Minuten mit 10 bis 500 mA/cm² vorzugsweise 50 bis 200 mA/cm² Oberfläche möglich. Bevorzugt erfolgt die Reinigung durch kathodische Polarisation. An Stelle der elektrochemischen Reinigung kann auch eine chemische Säuberung z.B. mit Schwefelsäure ~ 70 Gew.% oder mit organischen Lösungsmitteln wie Aceton, Dioxan und Tetrahydrofuran erfolgen.

Beispiel 1

Ein Wolframdraht bestehend aus 99,9% Wolfram von 2 mm Durchmesser und 150 mm Länge wird mit glasfaserverstärktem Teflon ummantelt, wobei für den Kontaktanschluß und als Meßfläche an beiden Enden der Draht auf 10 mm Länge nicht abgedeckt wird. Die freie Meßoberfläche wird durch Abschleifen mit einem feinem Korundpulver und Wasser von Verunreinigungen und Oxidresten befreit. Nach dieser Behandlung reinigt man die Oberfläche mit Aceton und Wasser. Zur Erzeugung der Oxidoberfläche polarisiert man die Wolframelektrode anodisch bei eine Potential von $\varepsilon_h$ ~ + 5 V gegen eine Platinelektrode etwa 15 Minuten bei +25°C in wäßriger, 50 gew.%iger Schwefelsäure. Nach dieser Behandlung hat der metallische Wolframkern eine Oxidoberfläche, die einen Leitwert $\kappa$ von $0,3 \cdot 10^{-1} \cdot \Omega^{-1}$ aufweist. Die einsatzfähige Meßelektrode wird gegen eine Platinhilfselektrode in wäßriger, 5 gew.%iger Salzsäure mit einer Stromstärke von 2,3 µA kathodisch polarisiert. Zur Polarisation kommt eine 9 V Gleichstromspannungsquelle mit einem Vorwiderstand von 3,88 MΩ zum Einsatz. Das Potential der Redoxelektrode wird gegen eine Silber-Silberchlorid-Referenzelektrode hochohmig gemessen. Nach Zusatz von salzsaurer $NaNO_2$-Lösung werden bezogen auf den $HNO_2$-Gehalt folgende Potentialwerte erhalten

| "HNO$_2$-Konzentration" ppm | Potential $\varepsilon_h$ mV |
|---|---|
| 1 | + 180 |
| 10 | + 500 |
| 100 | + 770 |
| 1000 | + 900 |

Setzt man dem salzsauren Elektrolyten mit 1 ppm "HNO$_2$" Salpetersäure zu, so ändert sich das Potential nicht wesentlich.

| HNO$_3$ Konzentration bei 1 ppm "HNO$_2$" ppm | Potential $\varepsilon_h$ mV |
|---|---|
| 10 | + 179 |
| 100 | + 182 |

Eine Platinredoxelektrode zeigt unter den vorangehenden Meßbedingungen in der "HNO$_2$"-haltigen Salzsäure folgende Abhängigkeit des Potentials von der "HNO$_2$-Konzentration".

| "HNO$_2$-Konzentration" ppm | Potential $\varepsilon_h$ mV |
|---|---|
| 1 | 820 |
| 10 | 860 |
| 100 | 895 |
| 1000 | 840 |

Die Wolfram-Elektrode wird bei der Diazotierung von Anilin in salzsaurer Lösung mit Natriumnitrit zum Benzoldiazoniumchlorid zur Messung der "HNO$_2$-Konzentration" eingesetzt. Anilin und Benzoldiazominiumchlorid haben keinen Einfluß auf das Potential der Redoxelektrode.

Beispiel 2

Eine Wolfram-Molydänlegierung bestehend aus 95 Gew.% Wolfram und 5 Gew.% Molybdän wird wie in Beispiel 1 vorbehandelt und aktiviert. Der elektrische Leitwert $\kappa$ des erzeugten Mischoxides beträgt $5 \cdot 10^{-3} \cdot \Omega^{-1}$ cm$^{-1}$. Die einsatzfähige Meßelektrode wird gegen eine Iridiumhilfselektrode mit einer Stromstärke von 1,73 $\mu$A kathodisch polarisiert. Zur Polarisation kommt eine 9 V Gleichstromspannungsquelle mit einem Vorwiderstand von 5.2 M$\Omega$ zum Einsatz. Die Redoxelektrode wird mit einer Silber/Silberchloridreferenzelektrode zur Messung von salpetriger Säure und Nitrosylverbindungen in schwefelsäurehaltigen Abwässern eingesetzt.

Beispiel 3

Eine Wolframelektrode wird wie in Beispiel 1 gefertigt und gereinigt. Zur Erzeugung der Oxidoberfläche polarisiert man die Elektrode anodisch bei einem Potential von $\varepsilon_h \sim$ + 7 V gegen eine Platinelektrode etwa 25 Minuten bei +25°C in wäßriger, 50 gew.%iger Schwefelsäure. Der elektrische Leitwert $\kappa$ des erzeugten Metalloxides beträgt $5 \cdot 10^{-2} \cdot \Omega^{-1}$ cm$^{-1}$. Die fertige Redoxelektrode wird gegen eine Platinhilfselektrode mit einer Stromstärke von 3,2 $\mu$A kathodisch polarisiert. Zur Polarisation kommt eine 9 V Gleichstromspannungsquelle mit einem Vorwiderstand von 2,8 M$\Omega$ zum Einsatz. Die Redoxelektrode wird mit einer Silber/Silberchloridreferenzelektrode zur Messung von salpetriger Säure in Salpetersäure und sauren Ammoniumnitratlösungen verwendet.

In wäßriger 10 gew.%iger Salpetersäure erhält man folgende Potentialwerte bezogen auf den "HNO$_2$-Gehalt"

| "HNO$_2$-Konzentration" ppm | Potential $\varepsilon_h$ mV |
|---|---|
| 1 | 220 |
| 10 | 480 |
| 100 | 780 |
| 1000 | 880 |

In wäßriger 10 gew.%iger Ammoniumnitratlösung mit einem pH-Wert von 1 werden folgende Potentialwerte bezogen auf den HNO$_2$ bzw. Nitritgehalt gemessen.

| HNO$_2$-Konzentration | Potential $\varepsilon_h$ |
|---|---|
| ppm | mV |
| 1 | 240 |
| 10 | 440 |
| 100 | 630 |
| 1000 | 780 |

## Patentansprüche

1. Redoxelektrode zur Bestimmung von salpetriger Säure und Nitrosylverbindungen in wäßriger, saurer Lösung, dadurch gekennzeichnet, daß der Elektrodenkern aus einem metallischen Leiter besteht, auf dem sich eine n-leitende Metalloxidoberfläche mit einem Leitwert $\kappa$ von $10^{-7} \cdot \Omega^{-1}$ cm$^{-1}$ bis $1 \cdot 10^2 \Omega^{-1} \cdot$ cm$^{-1}$ befindet.

2. Redoxelektrode nach Anspruch 1, dadurch gekennzeichnet, daß als Elektrodenkern Metalle der IV. bis VI. Nebengruppe des periodischen Systems der Elemente verwendet werden.

3. Redoxelektrode nach Anspruch 1 bis 2, dadurch gekennzeichnet, daß die n-leitende Metalloxidoberfläche aus Oxiden oder Mischoxiden der Elemente Wolfram, Molybdän, Vanadium, Tantal oder Titan besteht.

4. Redoxelektrode nach Anspruch 1 bis 3, dadurch gekennzeichnet, daß die n-leitende Metall-Oxidoberfläche durch anodische Oxidation des Elektrodenkerns in wäßriger halbkonzentrierter Schwefelsäure bei Raumtemperatur erzeugt wird.

5. Redoxelektrode nach Anspruch 1 bis 4, dadurch gekennzeichnet, daß die anodisch erzeugte Oxidschicht eine Dicke von > 100 Å aufweist.

6. Redoxelektrode nach Anspruch 1 bis 5, dadurch gekennzeichnet, daß der Elektrodenkern mit der n-leitenden Metalloxidoberfläche zur potentiometrischen Bestimmung von salpetriger Säure und Nitrosylionen verwendet wird.

## Claims

1. A redox electrode for determining nitrous acid and nitrosyl compounds in aqueous, acidic solution, wherein the electrode core consists of a metallic conductor on which an n-conducting metal oxide surface having a conductivity $\kappa$ of from $10^{-7}$ to $1 \cdot 10^2 \Omega^{-1}$cm$^{-1}$1 is present.

2. A redox electrode as claimed in claim 1, wherein a metal of subgroups IV to VI of the Periodic Table of elements is used as the electrode core.

3. A redox electrode as claimed in claim 1 or 2, wherein the n-conducting metal oxide surface consists of an oxide or mixed oxide of the elements tungsten, molybdenum, vanadium, tantalum or titanium.

4. A redox electrode as claimed in claim 1 or 2 or 3, wherein the n-conducting metal oxide surface is produced by anodic oxidation of the electrode core in aqueous semiconcentrated sulfuric acid at room temperature.

5. A redox electrode as claimed in claim 1 or 2 or 3 or 4, wherein the anodically produced oxide layer is > 100 Å thick.

6. A redox electrode as claimed in claim 1 or 2 or 3 or 4 or 5, wherein the electrode core having the n-conducting metal oxide surface is used for the potentio-metric determination of nitrous acid and nitrosyl ions.

## Revendications

1. Electrode d'oxydoréduction pour doser l'acide nitreux et les composés à groupes nitrosyle en solution aqueuse acide, caractérisée par le fait que le noyau d'électrode est constitué par un conducteur métallique qui est pourvu d'une surface d'oxyde métallique n-conductrice d'une conductance de $10^{-7} \cdot \Omega^{-1} \cdot$ cm$^{-1}$ à $1 \cdot 10^2 \Omega^{-1} \cdot$ cm$^{-1}$.

2. Electrode d'oxydoréduction selon la revendication 1, caractérisée par le fait que l'on utilise comme noyau d'électrode des métaux des IVe à VIe groupes secondaires du tableau périodique des éléments.

3. Electrode d'oxydoréduction selon les revendications 1 et 2, caractérisée par le fait que la surface d'oxyde métallique n-conductrice est constituée d'oxydes ou de mélanges d'oxydes des éléments tungstène, molyb-

EP 0 305 769 B1

dène, vanadium, tantale ou titane.

4. Electrode d'oxydoréduction selon les revendications 1 à 3, caractérisée par le fait que la surface d'oxyde métallique n-conductrice est produite par oxydation anodique du noyau d'électrode dans de l'acide sulfurique aqueux mi-concentré, à température ordinaire.

5. Electrode d'oxydoréduction selon les revendications 1 à 4, caractérisée par le fait que la couche d'oxyde produite anodiquement présente une épaisseur de > 100 Å.

6. Electrode d'oxydoréduction selon les revendications 1 à 5, caractérisée par le fait que le noyau d'électrode à surface d'oxyde métallique n-conductrice est utilisée pour le dosage potentiométrique d'acide nitreux et d'ions nitrosyle.